# EUROPEAN PATENT APPLICATION

(11) **EP 2 412 675 A1**
(43) Date of publication of application: **01.02.2012**
(21) Application number: 11170342.7
(22) Date of filing: 17.06.2011
(51) Int. Cl.: C01G 31/02, C01F 7/08, C22B 34/22, C01G 31/00, C01G 49/02, B01J 21/20, B01J 23/92

(54) **Process for isolating vanadium**

(30) Priority: 26.07.2010 NL 2005158
(71) Applicant: Greenshores Patent BV, Netherlands Antilles (NL)
(72) Inventor: Mambote, Cyril Roger Mpai, 3195 SG Pernis (NL)
(74) Representative: Cramwinckel, Michiel

(57) **Abstract**

The invention relates to a process for isolating vanadium as a vanadium compound from a solid composition comprising oxides and/or hydroxides of aluminium, oxides of vanadium and oxides of iron. The process comprises the following steps:
(i) calcination of the solid composition,
(ii) oxidation by means of salt roasting of the solid composition with an alkali compound to obtain a roasted composition,
(iii) contacting the roasted composition with an aqueous solution wherein the pH of the aqueous solution when in contact with the roasted composition is between 7 and 10 to obtain an aqueous solution comprising soluble salts of vanadium oxides and a remaining solid composition,
(iv) separating the aqueous solution comprising soluble salts of vanadium oxides and the remaining solid composition,
(v) obtaining the vanadium compound or a precursor of the vanadium compound by precipitation of the vanadium oxides with a suitable cation and wherein the resulting precipitated solids are separated from the aqueous solution by means of filtration.

## Description

The invention is directed to a process for isolating vanadium as a vanadium compound from a solid composition comprising oxides and/or hydroxides of aluminium, oxides of vanadium and oxides of iron.

Various publications are directed to isolating vanadium from spent hydroprocessing catalyst. EP-A-2125136 describes a process for recovery of vanadium from a spent desulfurization catalysts also containing sulphur and molybdenum. The method comprises roasting steps and multiple acid leaching steps and calcination steps to finally obtain vanadium pentoxide as a vanadium compound.

US-A-5415849 describes a process for dissolving a used catalyst having alumina as a principle component. The used catalyst is first roasted. To the roasted catalyst aluminium is added to accelerate the total dissolution of the roasted product in sulphuric acid.

EP-A-487379 describes a process for the recovery of vanadium from spent hydroprocessing catalysts comprising alumina and oxides of vanadium. The process involves a calcination step, salt roasting and contacting with water.

EP-A-771881 describes a process to recover vanadium and molybdenum from spent hydroprocessing catalyst consisting of an alumina carrier. The process involves a first salt roasting step followed by grinding and contacting with water.

US-A-3773890 describes a process to recover vanadium from spent hydroprocessing catalysts wherein the catalyst is first calcined to remove all of the carbon as deposited on the spent catalyst. The calcination step is followed by a NaCl roasting, a water leaching and a vanadium recovery step.

US-A-3376105 describes a process wherein an ion exchange resin loaded with chloride ions is used to separate V₄O₁₂⁴⁻ from an aqueous solution.

Catalysts used in the process of preparing sulphuric acid or catalyst used in certain polymerisation reactions are catalyst comprising vanadium and iron. These catalysts also have high contents of aluminium hydroxide, whereas the spent hydroprocessing catalysts are substantially composed of alumina. Another difference is that spent hydroprocessing catalysts contain carbon deposits which require a first calcination step as illustrated in US-A-3773890, wherein the spent polymerisation catalyst have substantially less of such carbon deposits.

There is a desire to isolate vanadium from these catalysts. The known processes for treating spent hydroprocessing catalysts are too complex because spent hydroprocessing catalysts contain high amounts of sulphur and other metals, such as for example nickel and molybdenum. The presence of these components require different and complex processing steps. These catalyst components are typically not, or only in small amounts, present in the composition to be treated by the present invention.

Another difference is the presence of a significant amount of iron in the solid composition to be treated by the present process. Typically the metals will be separated from the solid composition by leaching with an acid aqueous solution wherein vanadium and iron dissolve in said solution. Iron is typically separated from said solution by increasing the pH whereby Fe(OH)₃ precipitates. It has however been found difficult to obtain vanadium in a high purity and quantity from such an aqueous solution because Fe(OH)₃ forms complex polymers resulting in a gel type composition. The gel type composition is difficult to separate from the aqueous solution. Another problem is co-precipitation of part of the vanadium while separating iron.

The object of the present process is to provide a process which can isolate vanadium in a high yield and purity from a solid composition also comprising iron and aluminium oxide and/or aluminium hydroxide.

The following process achieves such an object.

Process for isolating vanadium as a vanadium compound from a solid composition comprising oxides and/or hydroxides of aluminium, oxides of vanadium and oxides of iron wherein the process comprises the following steps:
(i) calcination of the solid composition,
(ii) oxidation by means of salt roasting of the solid composition with an alkali compound to obtain a roasted composition,
(iii) contacting the roasted composition with an aqueous solution wherein the pH of the aqueous solution when in contact with the roasted composition is between 7 and 10 to obtain an aqueous solution comprising soluble salts of vanadium oxides and a remaining solid composition,
(iv) separating the aqueous solution comprising soluble salts of vanadium oxides and the remaining solid composition,
(v) obtaining the vanadium compound or a precursor of the vanadium compound by precipitation of the vanadium oxides with a suitable cation and wherein the resulting precipitated solids are separated from the aqueous solution by means of filtration.

Applicants found that by performing step (iii) with an aqueous solution having the claimed pH range a substantial amount of the iron compounds remain in the solid aluminium oxide while soluble vanadium salts end up in the aqueous solution. The vanadium compound or precursor of the vanadium compound can now be obtained by simple precipitation of the vanadium oxides, wherein the prior art problems are avoided. Another advantage is that solid alumina substantially free of other metals can be obtained. The thus obtained alumina can be reused. Other advantages will be discussed when discussing the preferred embodiments described below.

The solid composition preferably is comprised of between 60 and 85 wt% oxides and/or hydroxides of aluminium. The solid composition especially suited to be treated by the present invention comprises between 50 and 85 wt% of aluminium hydroxides. The solid composition preferably is comprised of between 10 and 30 wt% oxides of vanadium. The solid composition preferably is comprised of between 1 and 10 wt% oxides of iron. A preferred oxides of aluminium is alumina. The solid composition suitably comprises of no sulphur, being less than 10 ppm sulphur, no molybdenum, being less than 0.1 wt% molybdenum as calculated as oxide and/or less no nickel, being less than 0.1 wt% nickel as calculated as oxide. The solid composition is preferably a spent or used polymerisation catalyst. Polymerisation catalysts typically are composed of an alumina carrier and because of hydration of the alumina carrier part of the alumina in the spent catalyst is present as aluminium hydroxide.

The solid composition may contain water. Preferably the solid composition is dried to remove all or a substantial part of the water prior to performing step (i). Drying may be performed under atmospheric conditions, for example at a temperature of between 100 and 110 °C in for example a rotary dryer.

In step (i) the solid composition is calcined in order to convert the aluminium hydroxide to alumina, preferably alpha-alumina, according to the following reaction:

2Al (OH) ₃ → Al₂O₃ +3H₂O (1)

The conversion to alumina is advantageous because it facilitates the easy separation and leaching of the solid composition in the downstream process steps. Furthermore in a preferred embodiment of the present invention the thus formed alumina is obtained as an end product suited for reuse as for example a catalyst carrier. Calcination in step (i) may be performed according to the known calcination processes. The calcination temperature is preferably between 200 and 550 °C and more preferably between 200 and 500 °C.

Preferably the alkali compound in step (ii) is sodium chloride or sodium carbonate and more preferably sodium carbonate. Sodium carbonate is preferred because the roasting reaction will then produce non-toxic carbon dioxide as a by-product. The objective of salt roasting of step (ii) is to improve the water solubility of the oxide(s) of vanadium. Salt roasting converts the oxide of vanadium to an oxidic anion of its maximum valance state, under oxidizing conditions. A water soluble sodium meta-vanadate is produced as shown below:

Na₂CO₃ + O₂ + V₂O₃ → 2NaVO₃ + CO₂ (2)

Na₂CO₃ + V₂O₅ → 2NaVO₃ + CO₂ (3)

Preferably the temperature in step (ii) is between 550 and 650 °C. Preferably the molar ratio of atomic alkali metal and atomic vanadium is between 0.95:1 to 1:0.95, more preferably about 1:1. A too high amount of alkali compound, i.e. sodium carbonate, results in the formation of pyro and ortho-vanadate. This is not desired because more salt is used and because pyro and ortho-vanadate are less water soluble than sodium meta-vanadate:

Sodium meta-vanadate: (Na₂O)(V₂O₅) = 2NaVO₃ (4)

Sodium pyro-vanadate: (Na₂O)₂(V₂O₅) = Na₄V₂O₇ (5)

Sodium ortho-vanadate: (Na₂O)₃(V₂O₅) = 2Na₃VO₄ (6)

Molar oxygen can be supplied as air, enriched air or purified oxygen. Preferably air is used because of the fact that it is easily available.

The temperature in step (ii) is preferably between 400 and 850 °C and more preferably between 400 and 650 °C. Step (i) and step (ii) may be performed in for example a chamber furnace or in a rotary roasting furnace. Drying, calcination and roasting may be performed in the same reactor in a batch like process or in a continuous mode.

The pH in step (iii) is between 7 and 10. The aqueous solution used in step (iii) may suitably have the quality of normal water, i.e. the quality of tap water or boiler feed water.

Separation in step (iv) is preferably performed by means of filtration.

In order to further improve the purity of the vanadium compound to be prepared it is preferred to, prior to performing step (v), contact the aqueous solution comprising soluble salts of vanadium oxides as obtained in step (iv) with an ion exchange resin in its anionic form such to obtain an aqueous solution poor in vanadium and an ion exchange resin loaded with vanadium. Separation of vanadium by means of an ion exchange resin in its anionic form is well known and can for example be performed by using the anion exchange resin Dowex 21K as obtainable from the DOW Chemical Company. The vanadium can be eluated from the loaded ion exchange resin to obtain an aqueous solution of vanadium. Vanadium can be isolated from this aqueous solution in step (v). By contacting with an ion exchange resin as here described the purity of the vanadium compound is found to increase from between 85 and 90 wt% to between 98 and 99.8 wt%.

Preparing and isolating the vanadium compounds or its precursor in step (v) is performed by first precipitation of the vanadium oxides from the aqueous solution. Precipitation can be performed by contacting the solution with gaseous NH₃ or solutions of NH₄OH or NH₄Cl. In a preferred embodiment an aqueous solution comprising NH₄OH is added to the aqueous solution wherein aminovanadate precipitates. The solution is preferably present in a stirred tank reactor to which the NH₄OH solution is supplied to over time. The rate of addition should not be too fast such to allow aminovanadate crystals to grow. Larger crystals are preferred for ease of separation. The temperature is preferably between 50 °C and the boiling temperature of the solution, more preferably below 80 °C. The temperature is suitably achieved by means of addition of steam to the tank reactor. The precipitated aminovanadate is separated from the aqueous solution, for example by means of filtration and/or centrifugation. The obtained aminovanadate solids are preferably subjected to a calcination step to obtain vanadium pentoxide. Calcination is preferably performed at a temperature of 450 °C or above. Suitable calcination furnaces are of the so-called open or closed type. Ammonia as released during calcination is preferably isolated and re-used in the present process as NH₄OH or NH₄Cl in step (v) as described above. In the above described process aminovanadate is considered to be a precursor of vanadium pentoxide, which is considered to be the vanadium compound obtainable by the process according to the invention.

The remaining solid composition of step (iv) will comprise iron oxides, aluminium oxides and vanadium oxides which are not separated from said solid composition in step (iii). Iron oxides and vanadium oxides are preferably separated from the solid in a next step (vi). Such separation is suitably performed by means of an acid leaching process to leach out soluble iron oxide ions and soluble vanadium oxide ions as will be described in more detail below. The resulting aqueous solution and the solids are separated, preferably by means of filtration. The thus obtained solid aluminium oxide composition as obtained in step (vi) is a substantially pure alumina composition and can be reused, for example as a catalyst carrier.

In step (vi) the solid composition is suitably leached by contacting the solid composition with an acid aqueous solution at a pH of below 1. The acid is preferably an aqueous solution of H₂SO₄. The weight content of solid composition in step (vi) is not critical. Too high content will make the mixture too viscous and a too low content is economically not attractive. A suitable range is between 5 and 30 wt%. The pressure at which step (vi) is performed is preferably atmospheric pressure, although higher pressures may be applied. The temperature at which step (vi) is performed may be ambient temperatures. Higher temperatures are advantageous because the leaching is more effective and lower contact times may then be applied. Preferably the temperature is above 50 °C and more preferably above 70 °C. The upper temperature is the boiling temperature of the aqueous solution. The temperature is preferably maintained by direct or indirect heat exchange, suitably by supplying steam to the aqueous solution when performing step (vi). Preferably the contact time is greater than 2 hours, more preferably greater than 3 hours. There is no upper limit to the contact time, but after a certain higher contact time the amount of vanadium leaching becomes very low. The practical upper limit is therefore 8, more preferably 4 hours.

Preferably a reducing agent is added to the aqueous solution as obtained in the acid leaching process such that vanadium oxides are converted to VO²⁺ ions. The reducing agent will also convert the iron compounds to its ferrous form. This is advantageous because less iron will then be loaded onto the ion-exchange resin in a preferred next step (vii). Addition of the reducing agent can be performed before, during or after separating the solid aluminium oxide. In a preferred embodiment the reducing agent is added after contacting with the aqueous solution at a pH of below 1 and before separating off the solid aluminium oxide. A preferred reducing agent is Na₂SO₃, which compound is preferably added as a solid to said solution. Other possible reducing agents are Na₂C₂O₄ and gaseous SO₂.

Step (vi) is preferably performed in an agitated tank reactor. The process can be performed as a batch or continuous process.

The aqueous solution obtained in step (vi) comprising iron and soluble salts of vanadium oxide are preferably subjected to a next step (vii) wherein the aqueous solution is contacted with an ion exchange resin in its H⁺ ionic form, which ion exchange resin is selective for the vanadium oxide ions, such to obtain an aqueous solution poor in vanadium and an ion exchange resin loaded with vanadium.

Preferably the pH of the aqueous solution obtained in step (vi) is adjusted to a value of between 1 and 2 before using said solution in step (vii). Preferably the pH is adjusted to a value of below 1.8 before using said solution in step (vii). Applicants found that vanadium and iron compounds may precipitate in the solution when the pH is too high. Adjusting the pH is preferably performed by adding a solution of NaOH or Na₂CO₃. Adjusting the pH may be performed prior, during or after separating the ash particles. Preferably adjusting the pH is performed after separating the alumina particles.

In step (vii) the aqueous solution obtained in step (vi) is contacted with an ion exchange resin in its H⁺ ionic form, which ion exchange resin is selective for VO²⁺ ions, such to obtain an aqueous solution poor in vanadium and an ion exchange resin loaded with vanadium. Ion exchange separation involves the interchange of ions between the aqueous solution and a solid resin. Step (vii) involves a three step operation preferably performed in columns filled with resin. The first is the transfer of the vanadium ion from the solution to the ion exchange resin, the second is the physical separation of the depleted solution from the resin, and the third is the transfer of the metal ion from the resin into a fresh aqueous solution. The first step is usually known as adsorption or loading and the last step as desorption or elution. Preferably vanadium is desorbed from the ion exchange resin by contacting the ion exchange resin with an aqueous solution of H₂SO₄ to obtain an aqueous solution rich in soluble salts of vanadium oxide in a step (viii).

Preferably prior to performing step (viii) the loaded ion exchange resin is contacted with an aqueous solution which is selective for desorption of iron compounds from the loaded ion-exchange resin and not selective for desorption of vanadium. A large portion of the iron compounds in the feed to step (vii) is converted to the ferrous form. Nevertheless some iron compounds are loaded on the ion exchange resin. In order to avoid that vanadium and iron are simultaneously desorbed it has been found preferred to first remove iron. Preferred selective solutions are aqueous solutions comprising EDTA which are preferably used to desorb iron selectively from the ion exchange resin.

Iron can be separated from the EDTA solution by known processes. Preferably iron is separated by contacting the solution with NaOH at a temperature of between 40 and 80 °C whereby iron precipitates as Fe(OH)₂. The advantage of this embodiment is that no other metal compounds are present in the iron containing solution which simplifies the iron precipitation and avoids the disadvantages of the prior art processes. The EDTA solution as obtained after iron precipitation/separation can be re-used in the process.

The ion exchange resin is subjected to a conditioning step after desorption of the iron and vanadium metals to make the resin suited for a next loading step. Conditioning of the resin to its H⁺ ionic form is preferably performed by contacting the resin with NaOH and subsequently with HCl containing aqueous solutions.

The type of ion exchange resin will be dependant on the desired quality of the separation selectivity and the composition of the feed to step (vii). The ion exchange resin may for example have chelating iminodiacetate groups for the selective removal of the metal cations. An example of such a resin is Lewatit TP 207 as obtainable from Sybron Chemicals Inc. More preferably the ion exchange resin is a strong acid type resin, for example resins having aminophosphonic groups, such as Duolite C467 as obtainable from Born Chemicals Co. Ltd.

Vanadium is subsequently desorbed from the ion exchange resin rich in vanadium in a further step (viii) by contacting the ion exchange resin with an aqueous solution of, preferably H₂SO₄, to obtain an aqueous solution rich in soluble salts of vanadium oxides. In a final step (ix) vanadium pentoxide is prepared and isolated from said aqueous solution.

Preparing and isolating vanadium pentoxide in step (ix) is preferably performed as described above for step (v). In an even more preferred embodiment steps (ix) and (v) are combined or at least make use of the same process steps and process equipment.

The aminovanadate is subsequently subjected to a calcination step to obtain vanadium pentoxide in a manner described above. Calcination of aminovanadate is preferably performed making use of the same process steps as described above or at least by making use of the same process equipment as described above.

In an alternative embodiment the precipitated precursor of the vanadium compound is contacted with hydrogen peroxide to obtain vanadium in its 5+ form and performing the calcination step in a closed furnace in the absence of added molecular oxygen to prepare vanadium pentoxide.

The advantage of performing steps (vii)-(ix) is that the aqueous solution rich in vanadium compounds as obtained in step (viii) is substantially free of iron compounds. This is advantageous because, as described above, it is found difficult to selectively precipitate vanadium from a solution also containing iron compounds. By performing the process as here described it has become possible to perform the iron precipitation step in the absence of vanadium. This is advantageous because in this manner less or none of the desired vanadium can coprecipitate with the iron.

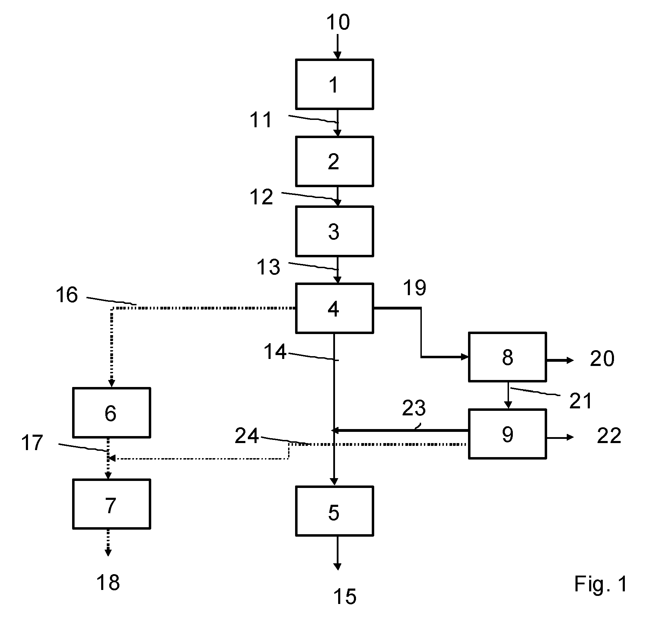

The invention will be illustrated by means of the following figure 1.

In Figure 1 a process is illustrated wherein a solid composition 10 is first dried in drying process block 1. Dried composition 11 is subsequently calcined in calcination process block 2 to obtain a calcined composition 12. This calcined composition 12 is subjected to oxidation by means of salt roasting of the solid composition with an alkali compound to obtain a roasted composition in process block 3. The roasted composition 13 is contacted in process block 4 with an aqueous solution wherein the pH of the aqueous solution when in contact with the roasted composition 13 is between 7 and 10. In process block 4 an aqueous solution comprising soluble salts of vanadium oxides 14 and a remaining solid composition 19 is, after separation, obtained. Vanadium pentoxide 15 is obtained by precipitation and calcination in process block 5.

The remaining composition 19 is subjected to acid leaching in process block 8 to obtain, after separation of the solid and leaching solution, an alumina solid composition 20 and a resulting aqueous solution 21. The aqueous solution 21 comprising iron and soluble salts of vanadium oxide is subjected to an ion exchange separation process block 9. In process block 9, as described in detail above, an aqueous solution 23 comprising soluble salts of vanadium oxides and an aqueous solution 22 comprising iron compounds are obtained as separate streams. A vanadium pentoxide 15 is obtained from stream 23 in process block 5.

Alternatively, when a vanadium compound of higher purity is desired the aqueous solution comprising soluble salts of vanadium oxides as obtained in process block 4 is subjected as stream 16 to a purification in process block 6. In process block 6 the aqueous solution is subjected to an ion exchange separation, wherein the ion exchange resin is in its anion form. Soluble salts of vanadium oxide are eluded from the ion exchange resin as stream 17 and subjected to precipitation and calcination in process block 7 to obtain vanadium pentoxide 18. In this alternative embodiment it is advantageous to also isolate the vanadium compounds from aqueous solution 24 as obtained in process block 9 in process block 7.

The invention will be illustrated by means of the following non-limiting example.

### Example 1

2857 g of a wet spent polymerisation catalyst was dried at 105 °C for 2 hours in a rotary dryer to obtain 1000 g of a dried solid comprising 72 wt% Al(OH)₃.

The 1000 g dried catalyst was subjected to a calcination step at 400 °C for 4 hours to obtain a calcined solid comprising 470 g Al₂O₃, 250 g water, 210 V₂O₅ and 40 g Fe₂O₃.

The calcined solid was subjected to a salt roasting by contacting with 120 g NaCO₃ at a temperature of 600 °C in a chamber electric furnace in the presence of air. The roasted solid contained 242 g NaVO₃.

The roasted solids were subsequently contacted with an aqueous solution at a pH of 7 in a stirred tank reactor at 80 °C for 3 hours. It was found that 80 wt% of the vanadium oxides as present in the roasted solids dissolved in the aqueous solution.

The aqueous solution was, after separating off the solids, directly subjected to precipitation with NH₄Cl-Calcination of the precipitate at 450 °C produced a first portion of vanadium pentoxide.

The said solids were subsequently contacted for 2 hours at 80 °C in a stirred tank reactor with another aqueous solution of H₂SO₄ at a pH below 1. Almost all of the vanadium and iron which was still present in the remaining alumina dissolved into the aqueous solution in this step. Subsequently a stoichiometric amount of solid Na₂SO₃ is added to the mixture in the same agitated tank reactor to convert vanadium to its VO²⁺ state and iron to its ferrous state.

The alumina particles are separated from the solution and the pH of the resulting solution is increased to 1.2 by adding an aqueous NaOH solution.

The resulting aqueous solution was cooled to 50 °C and subsequently passed in a continuous mode over a Duolite C467 ion-exchange resin as present in a column. The resulting ion-exchange resin was loaded with vanadium and iron compounds and the resulting aqueous solution leaving the column was poor in these compounds. The amount of ion-exchange resin was sufficiently high that no breakthrough of either vanadium or iron compounds takes place.

Iron was removed from the loaded ion-exchange resin by passing an aqueous solution of EDTA over said ion-exchange resin.

Vanadium was subsequently removed from the loaded ion-exchange resin by passing an aqueous solution of sulphuric acid over said ion-exchange resin to obtain a solution rich in vanadium. This slurry was directly subjected to pH adjustment with NH₄OH and subsequently oxidized with H₂O₂ wherein a precipitated red cake was obtained. The precipitation with concentrated ammonium hydroxide began at a pH of about 3.5 and was completed at a pH of about 7. Calcination of the precipitate at 450°C in a closed furnace produced a second portion of vanadium pentoxide.

First and second portion of vanadium pentoxide were added and it was found that 98 wt% of vanadium (on an atomic basis) of the originally present in the spent polymerisation catalyst was recovered as vanadium pentoxide. The purity of the vanadium pentoxide was 99.8 wt%. 95 wt% of aluminium was recovered as alumina based on the total atomic amount of aluminium as was present in the spent polymerisation catalyst. The recovered alumina contained less than 0.5 wt% vanadium oxide and less than 0.1 wt% iron oxide.

## Claims

1. Process for isolating vanadium as a vanadium compound from a solid composition comprising oxides and/or hydroxides of aluminium, oxides of vanadium and oxides of iron wherein the process comprises the following steps:
(i) calcination of the solid composition,
(ii) oxidation by means of salt roasting of the solid composition with an alkali compound to obtain a roasted composition,
(iii) contacting the roasted composition with an aqueous solution wherein the pH of the aqueous solution when in contact with the roasted composition is between 7 and 10 to obtain an aqueous solution comprising soluble salts of vanadium oxides and a remaining solid composition,
(iv) separating the aqueous solution comprising soluble salts of vanadium oxides and the remaining solid composition,
(v) obtaining the vanadium compound or a precursor of the vanadium compound by precipitation of the vanadium oxides with a suitable cation and wherein the resulting precipitated solids are separated from the aqueous solution by means of filtration.

2. Process according to claim 1, wherein the solid composition comprises between 50 and 85 wt% of aluminium hydroxide.

3. Process according to any one of claims 1-2, wherein the alkali compound in step (ii) is sodium carbonate.

4. Process according to any one of claims 1-3, wherein the molar ratio of atomic alkali metal and atomic vanadium is about 1:1.

5. Process according to any one of claims 1-4, wherein prior to performing step (v) the aqueous solution comprising soluble salts of vanadium oxides as obtained in step (iv) is contacted with an ion exchange resin in its anionic form such to obtain an aqueous solution poor in vanadium compounds and an ion exchange resin loaded with vanadium compounds, and desorption of the vanadium compounds from the ion exchange resin rich in vanadium compounds to obtain an aqueous solution rich in vanadium oxides which is used as feed in step (v).

6. Process according to any one of claims 1-5, wherein iron oxides and vanadium oxides are separated from the remaining solid composition as obtained in step (iv) in a next step (vi) by means of an acid leaching process by contacting the solid composition with an acid aqueous solution at a pH of below 1.

7. Process according to claim 6, wherein the acid aqueous solution is an aqueous solution of H₂SO_{4.}

8. Process according to any one fo claims 6-7, wherein a reducing agent is added to the aqueous solution as obtained in the acid leaching process such that the vanadium oxide is converted to VO²⁺ ions.

9. Process according to claim 8, wherein the aqueous solution obtained in step (vi) is contacted with an ion exchange resin in its H⁺ ionic form in a next step (vii), which ion exchange resin is selective for VO²⁺ ions, such to obtain an aqueous solution poor in vanadium and an ion exchange resin loaded with vanadium and wherein vanadium is desorbed from the ion exchange resin rich to obtain an aqueous solution rich in soluble salts of vanadium oxides in a step (viii).

10. Process according to claim 9, wherein the pH of the aqueous solution obtained in step (vi) is adjusted to a value of between 1 and 2 before using said solution in step (vii).

11. Process according to claim 10, wherein the pH of the aqueous solution obtained in step (vi) is adjusted to a value of below 1.8 before using said solution in step (vii).

12. Process according to anyone of claims 9-11, wherein, prior to desorption of vanadium, the loaded ion exchange resin is contacted with an aqueous solution which is selective for desorption of iron compounds from the loaded ion-exchange resin and not selective for desorption of vanadium.

13. Process according to any one of claims 9-12, wherein the aqueous solution rich in soluble salts of vanadium oxide is used as feed in step (v).

14. Process according to any one of claims 1-12, wherein the vanadium compound is obtained by precipitation in step (v) by adding an aqueous solution comprising NH₄OH or NH₄Cl to the aqueous solution, separating the precipitated aminovanadate from the aqueous solution and performing a calcination step to obtain vanadium pentoxide as the vanadium compound.

15. Process according to any one of claims 1-14, wherein the solid composition is comprised of between 60 and 85 wt% oxides and/or hydroxides of aluminium, between 10 and 30 wt% oxides of vanadium and between 1 and 10 wt% oxides of iron.
